# FASCICULE DE BREVET EUROPEEN

(11) **EP 4 339 010 B1**
(45) Date de publication et mention de la délivrance du brevet: **01.01.2025**
(21) Numéro de dépôt: 23181030.0
(22) Date de dépôt: 22.06.2023
(51) Int. Cl.: B60L 53/12, B60L 53/302, B60L 53/34, H02J 50/10, B60L 53/35

(54) **DISPOSITIF DE TRANSFERT D' ENERGIE ÉLECTRIQUE COMPRENANT UN SYSTÈME DE CENTRAGE**
VORRICHTUNG ZUR ÜBERTRAGUNG ELEKTRISCHER ENERGIE MIT EINEM ZENTRIERSYSTEM
DEVICE FOR TRANSFERRING ELECTRICAL ENERGY COMPRISING A CENTRING SYSTEM

(30) Priorité: 23.08.2022 FR 2208460
(43) Date de publication de la demande: 20.03.2024
(73) Titulaire: Airbus (S.A.S.), 31700 Blagnac (FR)
(72) Inventeur: CHASSAIGNE, Didier, 31700 Blagnac (FR); FORGET, Frédéric, 31700 Blagnac (FR); REVEL, Ivan, 31700 Blagnac (FR); LOEHRMANN, Antoine, 31700 Blagnac (FR); CREPEL, Olivier, 31700 Blagnac (FR)
(74) Mandataire: Airbus-OPS SAS

(56) Documents cités:
- JP-A- 2000 114 079
- JP-A- 2003 209 020
- JP-A- 2019 045 163
- JP-B2- 5 852 873
- US-A1- 2019 348 862

## Description

### DOMAINE TECHNIQUE

La présente demande se rapporte à un dispositif de transfert d'énergie électrique comprenant un système de centrage. Ce dispositif est destiné à équiper un véhicule volant et un module au sol.

### ETAT DE LA TECHNIQUE ANTERIEURE

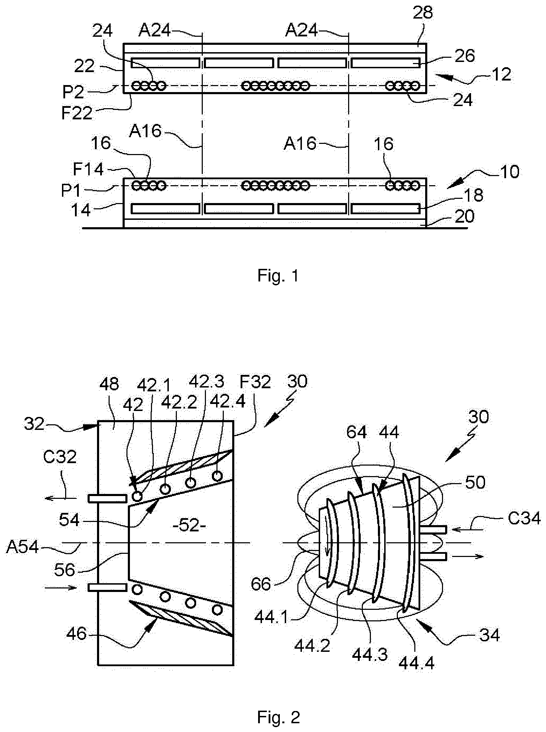

Selon un mode de réalisation visible sur la figure 1, un dispositif de transfert d'énergie électrique sans contact comprend un système émetteur 10 d'énergie électrique ainsi qu'un système récepteur 12 d'énergie électrique, les systèmes émetteur et récepteur étant mobiles l'un par rapport à l'autre et configurés pour permettre un transfert d'énergie électrique par induction magnétique lorsqu'ils sont dans un état rapproché, proches l'un de l'autre.

Le système émetteur 10 comprend un premier boîtier 14 qui présente une première face F14 orientée vers le système récepteur 12. Il comprend également, à l'intérieur du premier boîtier 14, en s'écartant de la première face F14, au moins une première bobine 16 (également dite émettrice) positionnée dans le premier boîtier 14, une couche d'éléments ferromagnétiques 18 en ferrite par exemple et une plaque de blindage 20.

Le système récepteur 12 comprend un deuxième boîtier 22 qui présente une deuxième face F22 orientée vers le système émetteur 10. Il comprend également, à l'intérieur du deuxième boîtier 22, en s'écartant de la deuxième face F22, au moins une deuxième bobine 24 également dite réceptrice positionnée dans le deuxième boîtier 22, une couche d'éléments ferromagnétiques 26 en ferrite par exemple et une plaque de blindage 28.

Selon une configuration, les première et deuxième bobines 16, 24 ont chacune une forme en double D et les premier et deuxième boîtiers 14, 22 sont remplis d'une résine de remplissage.

Selon ce mode de réalisation, les première et deuxième bobines 16, 24 sont planes et comprennent des spires enroulées de manière concentrique autour d'axes d'enroulement A16, A24, dans des premier et deuxième plans P1, P2.

Pour que le transfert d'énergie électrique soit optimal, il est nécessaire que les axes d'enroulement A16, A24 des systèmes émetteur et récepteur 10 et 12 soient alignés. En pratique, cet alignement est relativement complexe à réaliser et à maintenir.

Le document JP5852873 décrit un dispositif d'alimentation sans contact selon l'art antérieur.

Le document JP2003209020 décrit un coupleur d'alimentation sans contact selon l'art antérieur.

Le document JP2000114079 décrit un connecteur de type à induction électromagnétique selon l'art antérieur.

Le document US2019348862 décrit un dispositif de transmission de puissance selon l'art antérieur.

La présente invention vise à remédier à tout ou partie des inconvénients de l'art antérieur.

### RESUME DE L'INVENTION

A cet effet, l'invention a pour objet un dispositif de transfert d'énergie électrique par induction magnétique comprenant une première partie qui comporte une première face frontale et au moins un premier élément de transfert d'énergie électrique ainsi qu'une deuxième partie qui comporte au moins un deuxième élément de transfert d'énergie électrique, les première et deuxième parties étant mobiles l'une par rapport à l'autre selon une direction de rapprochement entre un état écarté et un état rapproché, les premier et deuxième éléments de transfert d'énergie électrique étant configurés pour assurer un transfert d'énergie électrique entre eux à l'état rapproché. Selon l'invention, la première partie comprend un premier logement débouchant au niveau de la première face frontale de la première partie et comportant au moins une première surface latérale, ledit premier logement étant configuré pour loger au moins partiellement la deuxième partie, la deuxième partie présentant une deuxième surface latérale pour chaque première surface latérale du logement de la première partie, la deuxième partie ayant une forme générale complémentaire de la forme du premier logement. En complément, chaque premier élément de transfert d'énergie électrique est positionné au niveau de la première surface latérale et chaque deuxième élément de transfert d'énergie électrique est positionné au niveau de la deuxième surface latérale et approximativement centré par rapport à un des premiers éléments de transfert d'énergie électrique lorsque les première et deuxième parties sont à l'état rapproché.

Selon l'invention, la première partie comprend également au moins une couche d'éléments ferromagnétiques entourant la première surface latérale, chaque premier élément de transfert d'énergie électrique étant positionné entre la couche d'éléments ferromagnétiques et la première surface.

Selon l'invention, au moins une première surface latérale présente des sections transversales qui diminuent en s'écartant de la première face frontale.

Selon l'invention, la couche d'éléments ferromagnétiques présente une géométrie sensiblement identique à la première surface latérale à une homothétie près.

Selon l'invention, la première partie comprend au moins un pion de centrage dans le premier logement et orienté parallèlement à la direction de rapprochement. En complément, la deuxième partie comprend au moins un deuxième logement configuré pour loger le au moins un pion de centrage.

Selon l'invention, la première partie comprend un élément ferromagnétique positionné dans le pion de centrage.

A l'état rapproché, les première et deuxième parties sont nécessairement positionnées de manière à assurer un transfert d'énergie électrique optimal grâce au logement qui permet de centrer les premier et deuxième éléments de transfert d'énergie électrique l'un par rapport à l'autre.

Selon une autre caractéristique, le dispositif de transfert d'énergie électrique comprend plusieurs premiers ou deuxièmes éléments de transfert d'énergie électrique décalés les uns par rapport aux autres selon la direction de rapprochement.

Selon une autre caractéristique, chaque première surface latérale est une surface de révolution.

Selon une autre caractéristique, le premier logement comprend deux premières surfaces latérales, dont une première surface latérale distale écartée de la première face frontale, présentant des sections transversales qui diminuent en s'écartant de la première face frontale ainsi qu'une première surface latérale débouchante, adjacente à la première face frontale, positionnée entre la première surface latérale distale et la première face frontale, présentant des sections transversales constantes.

Selon une autre caractéristique, au moins l'une des parties parmi les première et deuxième parties comprend un capteur de guidage pour aider au positionnement des première et deuxième parties l'une par rapport à l'autre de manière centrée.

Selon une autre caractéristique non revendiquée, le dispositif de transfert d'énergie électrique comprend au moins un système de verrouillage configuré pour maintenir les première et deuxième parties dans l'état rapproché.

Selon une autre caractéristique non revendiquée, le système de verrouillage comprend un ressort hélicoïdal en forme de tore, une première gorge périphérique positionnée au niveau de la première surface latérale de la première partie et configurée pour loger partiellement, au moins à l'état rapproché, le ressort hélicoïdal en forme de tore ainsi qu'une deuxième gorge périphérique positionnée au niveau de la deuxième surface latérale de la deuxième partie et configurée pour loger partiellement, au moins à l'état rapproché, le ressort hélicoïdal en forme de tore, les première et deuxième gorges périphériques étant positionnées en vis-à-vis l'une de l'autre lorsque les première et deuxième parties sont dans l'état rapproché.

Selon une autre caractéristique, chaque premier élément de transfert d'énergie électrique est une première bobine ou une spire d'une première bobine. En complément, chaque deuxième élément de transfert d'énergie électrique est une deuxième bobine ou une spire d'une deuxième bobine.

Selon une autre caractéristique non revendiquée, la première partie comprend au moins un système de refroidissement configuré pour maintenir la couche d'éléments ferromagnétiques à une température inférieure à un seuil donné.

Selon une autre caractéristique non revendiquée, le système de refroidissement comprend un circuit de refroidissement qui présente une entrée d'un fluide caloporteur, une sortie du fluide caloporteur ainsi qu'un tronçon de circuit relié entre l'entrée et la sortie de fluide caloporteur, ledit tronçon de circuit étant enroulé au niveau de la première surface latérale entre chaque premier élément de transfert d'énergie électrique.

### BREVE DESCRIPTION DES FIGURES

D'autres caractéristiques et avantages ressortiront de la description de l'invention qui va suivre, description donnée à titre d'exemple uniquement, en regard des dessins annexés parmi lesquels :
Fig. 1 est une représentation schématique d'un dispositif de transfert d'énergie électrique sans contact illustrant un mode de réalisation de l'art antérieur,
Fig. 2 est une représentation schématique d'un dispositif de transfert d'énergie électrique sans contact illustrant un mode de réalisation de l'invention dans un état écarté,
Fig. 3 est une représentation schématique du dispositif de transfert d'énergie électrique sans contact visible sur la figure 2 dans un état rapproché,
Fig. 4 est une représentation schématique d'un dispositif de transfert d'énergie électrique sans contact illustrant un autre mode de réalisation de l'invention,
Fig. 5 est une représentation schématique d'un dispositif de transfert d'énergie électrique avec contact illustrant un mode de réalisation de l'invention dans un état écarté,
Fig. 6 est une représentation schématique du dispositif de transfert d'énergie électrique avec contact visible sur la figure 5 dans un état rapproché,
Fig. 7 est une représentation schématique d'un dispositif de transfert d'énergie électrique avec contact illustrant un autre mode de réalisation de l'invention dans un état rapproché,
Fig. 8 est une représentation schématique d'un dispositif de transfert d'énergie électrique avec contact, illustrant un autre mode de réalisation de l'invention, dans un état écarté,
Fig. 9 est une représentation schématique d'un véhicule volant et d'un module au sol équipés d'un dispositif de transfert d'énergie électrique illustrant une première application de l'invention,
Fig. 10 est une représentation schématique d'un véhicule volant et d'un module au sol équipés d'un dispositif de transfert d'énergie électrique illustrant une deuxième application de l'invention.

### DESCRIPTION DES MODES DE REALISATION

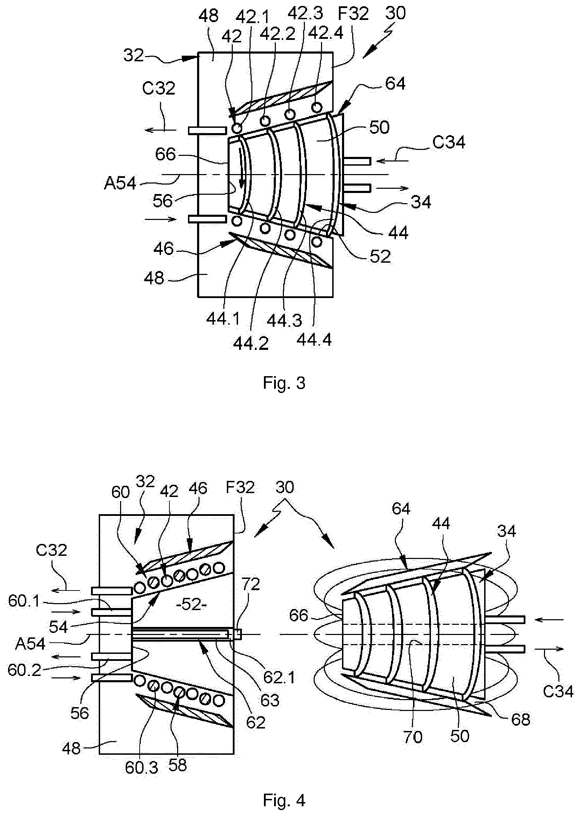

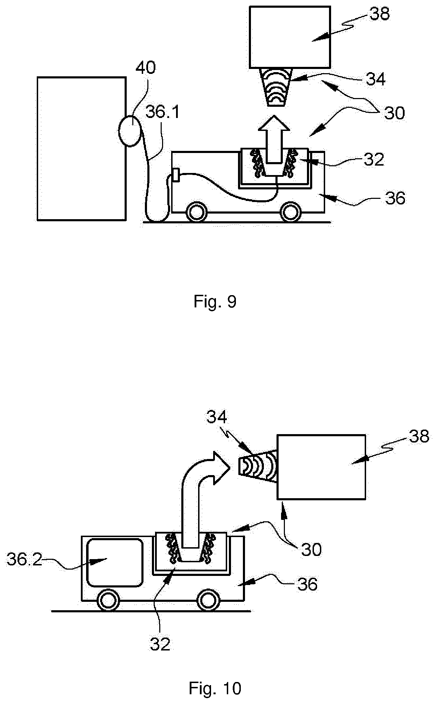

Un dispositif de transfert d'énergie électrique 30 comprend une première partie 32 ainsi qu'une deuxième partie 34, les première et deuxième parties 32, 34 étant mobiles l'une par rapport à l'autre selon une direction de rapprochement entre un état écarté, visible sur la figure 2, ainsi qu'un état rapproché, visible sur la figure 3, dans lequel un transfert d'énergie électrique est opéré entre les première et deuxième parties 32, 34. Selon des applications visibles sur les figures 9 et 10, le dispositif de transfert d'énergie électrique 30 est utilisé pour assurer un transfert d'énergie électrique entre un module au sol 36 intégrant la première partie 32 et un véhicule volant 38, intégrant la deuxième partie 34, qui peut être un avion, un véhicule volant de type eVTOL (pour « electric vertical take-off and landing » en anglais), un drone ou tout autre véhicule volant.

Le transfert d'énergie électrique peut être utilisé pour recharger au moins un système de stockage d'énergie électrique présent dans le véhicule volant 38 et/ou pour alimenter au moins un équipement électrique présent dans le véhicule volant 38.

Selon une application, le module au sol 36 est statique. Selon d'autres applications visibles sur les figures 9 et 10, le module au sol 36 est mobile et correspond à un véhicule terrestre. Selon une configuration visible sur la figure 9, le module au sol 36, mobile, est relié par un câble électrique 36.1 à une alimentation électrique 40 pour alimenter la première partie 32 du dispositif de transfert d'énergie électrique 30. Selon une autre configuration visible sur la figure 10, le module au sol 36, mobile, comprend au moins un système de stockage d'énergie électrique 36.2 rechargeable pour alimenter la première partie 32 du dispositif de transfert d'énergie électrique 30.

Bien entendu, l'invention n'est pas limitée à ces applications.

Selon une première variante visible sur les figures 2 à 4, le dispositif de transfert d'énergie électrique 30 comprend un système de transfert d'énergie électrique sans contact entre un premier circuit électrique C32 solidaire de la première partie 32 et un deuxième circuit électrique C34 solidaire de la deuxième partie 34.

Selon un mode de fonctionnement, la première partie 32 correspond à un système émetteur d'énergie électrique et la deuxième partie 34 correspond à un système récepteur d'énergie électrique.

Le système de transfert d'énergie sans contact comprend au moins une première bobine 42 solidaire de la première partie 32 et reliée au premier circuit électrique C32 ainsi qu'une deuxième bobine 44 solidaire de la deuxième partie 34 et reliée au deuxième circuit électrique C34.

Selon un mode de réalisation, la première partie 32 comprend, en plus de la première bobine 42, une première face frontale F32 sensiblement perpendiculaire à la direction de rapprochement, au moins une couche d'éléments ferromagnétiques 46, en ferrite par exemple, ainsi qu'un premier support 48 supportant la première bobine 42 et la couche d'éléments ferromagnétiques 46. En complément, la première partie 32 peut comprendre au moins une plaque de blindage.

La deuxième partie 34 comprend un deuxième support 50 supportant la deuxième bobine 44. La deuxième partie 34 peut comprendre au moins une couche d'éléments ferromagnétiques, en ferrite par exemple, et au moins une plaque de blindage. L'absence de couche d'éléments ferromagnétiques et de plaque de blindage permet de réduire la masse de la deuxième partie 34.

La première partie 32 comprend un premier logement 52 qui débouche au niveau de la première face frontale F32 de la première partie 32, comportant au moins une première surface latérale 54 et configuré pour loger au moins partiellement la deuxième partie 34.

Selon un mode de réalisation, la première surface latérale 54 est une surface de révolution et présente un premier axe de révolution A54. Comme illustré sur les figures 2 à 4, la première surface latérale 54 est tronconique. Selon d'autres configurations, la première surface latérale 54 peut être conique, cylindrique, ou en forme de demi-sphère.

Selon un autre mode de réalisation, la première surface latérale 54 présente des sections oblongues et comprend deux portions de surface de révolution, présentant chacune un axe de révolution, reliées par des surfaces planes.

Selon ces modes de réalisation, la première surface latérale 54 comprend au moins une portion de surface de révolution présentant un premier axe de révolution A54. Ainsi, la première surface latérale 54 ou seulement une portion de la première surface latérale 54 est une surface de révolution et présente un premier axe de révolution A54. Le fait de prévoir une première surface latérale 54 de révolution permet de positionner les première et deuxième parties 32, 34 à l'état rapproché sans se soucier de l'orientation relative des première et deuxième parties 32, 34 autour du premier axe de révolution A54.

L'axe de révolution A54 est parallèle à la direction de rapprochement. Un plan transversal est perpendiculaire au premier axe de révolution A54.

Selon un agencement, ce premier axe de révolution A54 est perpendiculaire à la première face frontale F32 de la première partie 32.

En fonction de la géométrie de la première surface latérale 54, le premier logement 52 peut comprendre un fond 56 sensiblement perpendiculaire à l'axe de révolution A54.

Selon une configuration, le premier logement 52 ou la première surface latérale 54 présente des sections transversales (dans des plans perpendiculaires au premier axe de révolution A54) qui diminuent en s'écartant de la première face frontale F32. Cette configuration permet d'obtenir un auto-centrage lors de l'insertion de la deuxième partie 34 dans le premier logement 52 de la première partie 32.

Selon une configuration, le logement 52 comprend deux premières surfaces latérales 54, dont une première surface latérale distale écartée de la première face frontale F32, présentant des sections transversales qui diminuent en s'écartant de la première face frontale F32 ainsi qu'une première surface latérale débouchante, adjacente à la première face frontale F32, positionnée entre la première surface latérale distale et la première face frontale F32, présentant des sections transversales constantes.

Selon une configuration, la première partie 32 comprend une unique première bobine 42 qui présente plusieurs spires 42.1 à 42.4 enroulées au niveau de la première surface latérale 54 et décalées les unes par rapport aux autres selon la direction de rapprochement. Selon un agencement, les spires 42.1 à 42.4 sont régulièrement réparties selon la direction de rapprochement.

Selon une autre configuration, la première partie 32 comprend plusieurs premières bobines 42 enroulées au niveau de la première surface latérale 54, décalées les unes par rapport aux autres selon la direction de rapprochement. Selon un agencement, les premières bobines 42 sont régulièrement réparties selon la direction de rapprochement.

Selon un mode de réalisation, le premier support 48 est un bloc de matière, par exemple en résine, qui présente une première surface correspondant à la première face frontale F32 ainsi qu'un creux correspondant au premier logement 52.

Selon un premier agencement, les spires de la première bobine 42 ou les premières bobines 42 sont totalement noyées dans le bloc de matière du premier support 48 et décalées vers l'intérieur du premier support 48 par rapport à la première surface latérale 54 en étant faiblement espacées de ladite première surface latérale 54. Selon un deuxième agencement, les spires de la première bobine 42 ou les premières bobines 42 sont partiellement noyées dans le bloc de matière du premier support 48 et positionnées à cheval sur la première surface latérale 54. Selon un troisième agencement, les spires de la première bobine 42 ou les premières bobines 42 ne sont pas noyées dans le bloc de matière du premier support 48 et décalées vers l'extérieur du premier support 48 par rapport à la première surface latérale 54 en étant faiblement espacées de ladite première surface latérale 54.

Quel que soit l'agencement, les spires de la première bobine 42 ou les premières bobines 42 sont maintenues immobiles par rapport à la première partie 32 part tout système de maintien approprié.

Lorsque la première partie 32 comprend une couche d'éléments ferromagnétiques 46, cette dernière présente une géométrie sensiblement identique à la première surface latérale 54 à une homothétie près. Selon une configuration, chaque spire de la première bobine 42 ou chaque première bobine 42 est positionnée à l'intérieur de la couche d'éléments ferromagnétiques 46, entre l'axe de révolution A54 et la couche d'éléments ferromagnétiques 46. La couche d'éléments ferromagnétiques 46 de la première partie 32 entoure la première surface latérale 54. Chaque spire de la première bobine 42 ou chaque première bobine 42 est positionnée entre la couche d'éléments ferromagnétiques 46 et la première surface latérale 54.

Selon un mode de réalisation illustré sur la figure 4, la première partie 32 comprend, à titre illustratif, non revendiqué, au moins un système de refroidissement 58 configuré pour maintenir la couche d'éléments ferromagnétiques 46 à une température inférieure à un seuil donné. Ce système de refroidissement 58 comprend un circuit de refroidissement 60 qui présente une admission de fluide caloporteur 60.1, une sortie de fluide caloporteur 60.2 ainsi qu'un tronçon de circuit 60.3, enroulé au niveau de la première surface latérale 54 entre les spires de la première bobine 42 ou les premières bobines 42, noyé dans le bloc de matière du premier support 48.

Selon un mode de réalisation visible sur la figure 4, la première partie 32 comprend au moins un pion de centrage 62, orienté parallèlement à la direction de rapprochement, qui présente une première extrémité reliée à la première partie 32 ainsi qu'une deuxième extrémité libre 62.1. Selon une configuration, le pion de centrage 62 est cylindrique et son extrémité libre 62.1 est positionnée approximativement dans le même plan que la première face frontale F32 de la première partie 32. Selon un agencement, le pion de centrage 62 cylindrique présente un axe confondu avec le premier axe de révolution A54.

Selon une configuration, au moins un élément ferromagnétique 63 est positionné dans le pion de centrage 62.

La deuxième partie 34 présente au moins une deuxième surface latérale 64 sensiblement identique à une homothétie près à la première surface 54 du premier logement 52 de la première partie 32. La deuxième surface latérale 64 présente au moins un deuxième axe de révolution A64 et une deuxième surface latérale 64 pour chaque première surface latérale 54 du logement 52 de la première partie 32, chaque deuxième surface latérale 64 étant sensiblement identique à une homothétie près à la première surface latérale 54 correspondante. La deuxième partie 34 a une forme générale complémentaire de la forme du premier logement 52.

A l'état rapproché, lorsque la deuxième partie 34 est au moins partiellement positionnée dans le premier logement 52 de la première partie 32, les première et deuxième surfaces latérales 54, 64 sont disposées en vis-à-vis en étant espacées d'une faible distance sensiblement identique sur toutes leurs surfaces.

Lorsque le premier logement 52 présente un fond 56, le deuxième support 50 présente une deuxième face frontale 66 sensiblement perpendiculaire au deuxième axe de révolution A64. A l'état rapproché, la deuxième face frontale 66 du deuxième support 50 est en contact ou faiblement espacée du fond 56 du premier logement 52 de la première partie 32.

Selon une configuration, la deuxième partie 34 comprend une unique deuxième bobine 44 qui présente plusieurs spires 44.1 à 44.4 enroulées au niveau de la deuxième surface latérale 64, décalées les unes par rapport aux autres selon la direction de rapprochement. Selon un agencement, les spires 44.1 à 44.4 sont régulièrement réparties selon la direction de rapprochement.

Selon une autre configuration, la deuxième partie 34 comprend plusieurs deuxièmes bobines 44 enroulées au niveau de la deuxième surface latérale 64, décalées les unes par rapport aux autres selon la direction de rapprochement. Selon un agencement, les deuxièmes bobines 44 sont régulièrement réparties selon la direction de rapprochement.

Selon un mode de réalisation, le deuxième support 50 est un bloc de matière, par exemple en résine, qui présente une première surface correspondant à la deuxième face frontale 66 ainsi qu'une face latérale correspondant à la deuxième surface latérale 64.

Selon un premier agencement, les spires de la deuxième bobine 44 ou les deuxièmes bobines 44 sont totalement noyées dans le bloc de matière du deuxième support 50 et décalées vers l'intérieur du deuxième support 50 par rapport à la deuxième surface latérale 64, en étant faiblement espacées de ladite deuxième surface latérale 64. Selon un deuxième agencement, les spires de la deuxième bobine 44 ou les deuxièmes bobines 44 sont partiellement noyées dans le bloc de matière du deuxième support 50 et positionnées à cheval sur la deuxième surface latérale 64. Selon un troisième agencement, les spires de la deuxième bobine 44 ou les deuxièmes bobines 44 ne sont pas noyées dans le bloc de matière du deuxième support 50 et décalées vers l'extérieur du deuxième support 50 par rapport à la deuxième surface latérale 64, en étant faiblement espacées de ladite deuxième surface latérale 64.

Selon un quatrième agencement, les spires de la deuxième bobine 44 ou les deuxièmes bobines 44 sont positionnées dans une cavité 68 ménagée dans le deuxième support 50.

Quel que soit l'agencement, les spires de la deuxième bobine 44 ou les deuxièmes bobines 44 sont maintenues immobiles par rapport à la première partie 34 par tout système de maintien approprié.

Lorsque la première partie 32 comprend au moins un pion de centrage 62, la deuxième partie 34 comprend un deuxième logement 70 pour chaque pion de centrage 62, configuré pour loger ce dernier de manière ajustée. Ce deuxième logement 70 comprend une paroi latérale cylindrique présentant un diamètre sensiblement identique à celui du pion de centrage 62. Selon un agencement, le deuxième logement 70 présente un axe confondu avec le deuxième axe de révolution A64.

Selon un mode de réalisation visible sur la figure 4, au moins l'une des parties parmi les première et deuxième parties 32, 34 comprend un capteur de guidage 72 pour aider au positionnement des première et deuxième parties 32, 34 l'une par rapport à l'autre de manière centrée. A titre d'exemple, le capteur de guidage 72 est un capteur de positionnement. Selon un agencement, le capteur de guidage 72 est positionné au niveau de la deuxième extrémité libre 62.1 du pion de centrage 62 de la première partie 32.

En fonctionnement, lorsque les première et deuxième parties 32, 34 sont dans l'état rapproché, comme illustré sur la figure 3, la deuxième partie 34 est au moins partiellement logée dans le premier logement 52 de la première partie 32 et les première et deuxième bobines 42, 44 sont positionnées en face les unes des autres, les deuxièmes bobines 44 étant positionnées à l'intérieur des premières bobines 44 de manière centrée.

Le fait de prévoir un logement 52 avec des sections transversales qui diminuent à partir de la première face frontale F32 de la première partie 32 permet, lors de l'introduction de la deuxième partie 34 dans le logement 52, d'obtenir un auto-centrage.

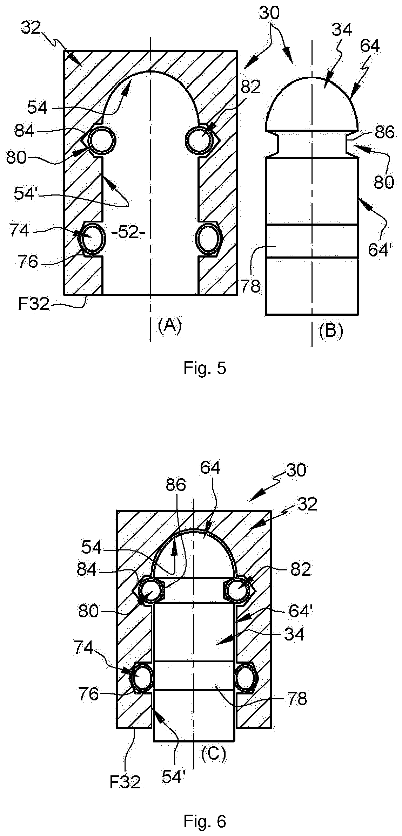

Selon une autre variante visible sur les figures 5 à 8, le dispositif de transfert d'énergie électrique 30 comprend au moins un système de transfert d'énergie électrique avec contact configuré pour assurer un transfert d'énergie électrique entre un premier circuit électrique C32 solidaire de la première partie 32 et un deuxième circuit électrique C34 solidaire de la deuxième partie 34.

Comme pour la première variante, la première partie 32 comprend une première face frontale S32 ainsi qu'un premier logement 52, débouchant au niveau de la première face frontale F32 et comportant au moins une première surface latérale 54, configuré pour recevoir au moins partiellement la deuxième partie 34.

La première surface latérale 54 comprend au moins une portion de surface de révolution présentant un premier axe de révolution A54. Ainsi, la première surface latérale 54 ou seulement une portion de la première surface latérale 54 est une surface de révolution et présente un premier axe de révolution A54.

Selon un agencement, ce premier axe de révolution A54 est perpendiculaire à la première face frontale F32 de la première partie 32.

En fonction de la géométrie de la première surface latérale 54, le premier logement 52 peut comprendre un fond 56 sensiblement perpendiculaire à l'axe de révolution A54.

Selon une configuration, le premier logement 52 ou la première surface latérale 54 présente des sections transversales (dans des plans perpendiculaires au premier axe de révolution A54) qui diminuent en s'écartant de la première face frontale F32. Cette configuration permet d'obtenir un auto-centrage lors de l'insertion de la deuxième partie 34 dans le premier logement 52 de la première partie 32.

Selon des modes de réalisation visibles sur les figures 5 à 7, le logement 52 comprend deux premières surfaces latérales 54, 54', une première surface latérale 54 distale, écartée de la première face frontale F32, présentant des sections transversales qui diminuent en s'écartant de la première face frontale F32 ainsi qu'une première surface latérale 54' débouchante, adjacente à la première face frontale F32, positionnée entre la première surface latérale 54 distale et la première face frontale F32, présentant des sections transversales constantes.

Selon un premier mode de réalisation visible sur les figures 5 et 6, la première surface latérale distale 54 est demi-sphérique et la première surface latérale débouchante 54' est cylindrique.

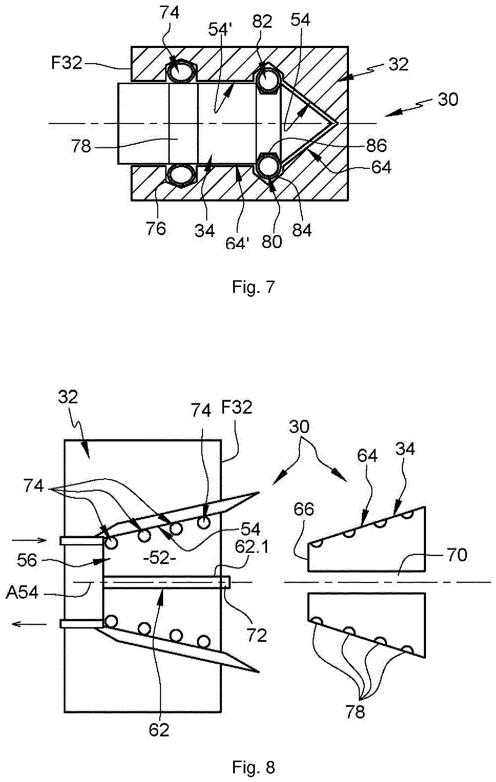

Selon un deuxième mode de réalisation visible sur la figure 7, la première surface latérale distale 54 est conique et la première surface latérale débouchante 54' est cylindrique.

Selon un autre mode de réalisation visible sur la figure 8, le logement 52 comprend une unique première surface latérale 54, par exemple tronconique.

La deuxième partie 34 présente au moins une deuxième surface latérale 64 sensiblement identique à une homothétie près à la première surface latérale 54 du premier logement 52 de la première partie 32. La deuxième surface latérale 64 présente au moins un deuxième axe de révolution A64 et présente une deuxième surface latérale 64 pour chaque première surface latérale 54 du logement 52 de la première partie 32, chaque deuxième surface latérale 64 étant sensiblement identique à une homothétie près à la première surface latérale 54 correspondante.

A l'état rapproché, lorsque la deuxième partie 34 est au moins partiellement positionnée dans le premier logement 52 de la première partie 32, les première et deuxième surfaces latérales 54, 64 sont disposées en vis-à-vis en étant espacées d'une faible distance sensiblement identique sur toutes leurs surfaces.

Le système de transfert d'énergie électrique avec contact comprend au moins un ressort hélicoïdal en forme de tore 74 et relié au premier ou deuxième circuit électrique C32, C34 qui, lorsque les première et deuxième parties 32, 34 sont dans l'état rapproché comme illustré sur la figure 6, est intercalé entre les première et deuxième surfaces latérales 54, 64 des première et deuxième parties 32, 34 et assure une continuité électrique entre les premier et deuxième circuits électriques C32, C34 des première et deuxième parties 32, 34.

Selon un mode de réalisation, au moins l'une des parties parmi les première et deuxième parties 32, 34 comprend une gorge périphérique 76, positionnée au niveau d'une première ou deuxième surface latérale 54, 64, configurée pour loger partiellement le ressort hélicoïdal en forme de tore 74 de sorte que ce dernier soit en saillie par rapport à la première ou deuxième surface latérale 54, 64. Selon l'exemple illustré sur les figures 5 et 6, la gorge périphérique 76 est prévue sur la première partie 32.

Le système de transfert d'énergie électrique avec contact comprend une borne de contact 78 reliée à un premier ou deuxième circuit électrique C32, C34 différent de celui auquel est relié le ressort hélicoïdal en forme de tore 74. Ce dernier et la borne de contact 78 sont agencés de manière à ce que le ressort hélicoïdal en forme de tore 74 soit en contact avec la borne de contact 78 lorsque les première et deuxième parties 32, 34 sont dans l'état rapproché.

Selon un mode de réalisation, la borne de contact 78 est une bague qui s'étend sur toute la circonférence de la première ou deuxième surface latérale 54, 64.

Selon un agencement, la première partie 32 comprend la gorge périphérique 76 et le ressort hélicoïdal en forme de tore 74 est relié au premier circuit électrique C32 de la première partie 32. En complément, la borne de contact 78 est solidaire de la deuxième partie 34 et reliée au deuxième circuit électrique C34 de la deuxième partie 34. Selon un autre agencement, la deuxième partie 34 comprend la gorge périphérique 76 et le ressort hélicoïdal en forme de tore 74 est relié au deuxième circuit électrique 34 de la deuxième partie 34. En complément, la borne de contact 78 est solidaire de la première partie 32 et reliée au premier circuit électrique C32 de la première partie 32.

Bien entendu, l'invention n'est pas limitée à ce mode de réalisation pour assurer le maintien immobile du ressort hélicoïdal en forme de tore 74 par rapport à la première ou deuxième partie 32, 34 à laquelle il est relié. Ainsi, la gorge périphérique 76 peut être remplacée par tout système de maintien approprié.

Comme illustré sur la figure 8, le dispositif de transfert d'énergie électrique 30 comprend plusieurs systèmes de transfert d'énergie électrique avec contact comportant chacun un ressort hélicoïdal en forme de tore 74, les différents ressorts hélicoïdaux en forme de tore 74 étant décalés les uns par rapport aux autres selon la direction de rapprochement.

Pour cette deuxième variante, la première partie 32 peut comprendre un pion de centrage 62 et la deuxième partie 34 peut comprendre un deuxième logement 70, comme pour la première variante.

Selon un mode de réalisation visible sur les figures 5 à 7, le dispositif de transfert d'énergie électrique 30 comprend, à titre illustratif, non revendiqué, au moins un système de verrouillage 80 configuré pour maintenir les première et deuxième parties dans l'état rapproché. Ce mode de réalisation peut s'appliquer indifféremment aux première et deuxième variantes.

Le système de verrouillage 80 comprend un ressort hélicoïdal en forme de tore 82 qui, lorsque les première et deuxième parties 32, 34 sont dans l'état rapproché comme illustré sur la figure 6, est intercalé entre les première et deuxième surfaces latérales 54, 64 des première et deuxième parties 32, 34 ; une première gorge périphérique 84, positionnée au niveau de la première surface latérale 54 de la première partie 32, configurée pour loger partiellement le ressort hélicoïdal en forme de tore 82, au moins à l'état rapproché, de sorte que ce dernier soit en saillie par rapport à la première surface latérale 54 ainsi qu'une deuxième gorge périphérique 86, positionnée au niveau de la deuxième surface latérale 64 de la deuxième partie 34, configurée pour loger partiellement le ressort hélicoïdal en forme de tore 82, au moins à l'état rapproché, de sorte que ce dernier soit en saillie par rapport à la deuxième surface latérale 64. Les première et deuxième gorges périphériques 84, 86 sont positionnées en vis-à-vis l'une de l'autre lorsque les première et deuxième parties 32, 34 sont dans l'état rapproché. Ainsi, dans l'état rapproché, le ressort hélicoïdal en forme de tore 82 est positionné à cheval dans les première et deuxième gorges périphériques 84, 86. Selon une configuration, à l'état écarté, le ressort hélicoïdal en forme de tore 82 est porté par la première partie 32. Il est configuré pour se comprimer de manière élastique pour permettre l'introduction de la deuxième partie 34 dans le logement 52 de la première partie 32 et revenir dans un état non comprimé lorsque les première et deuxième gorges périphériques 84, 86 sont disposées en vis-à-vis et les première et deuxième parties 32, 34 dans l'état rapproché.

Quelle que soit la variante, le dispositif de transfert d'énergie comprend au moins un premier élément de transfert d'énergie électrique (parmi une spire d'une première bobine 42, une première bobine 42, un ressort hélicoïdal en forme de tore 74 ou une borne de contact 78) relié au premier circuit électrique C32 et positionné au niveau de la première surface latérale 54 de la première partie 32 ainsi qu'au moins un deuxième élément de transfert d'énergie électrique (parmi une spire d'une première bobine 42, une première bobine 42, un ressort hélicoïdal en forme de tore 74 ou une borne de contact 78) relié au deuxième circuit électrique C34, positionné au niveau de la deuxième surface latérale 64 de la deuxième partie 32 et approximativement centré par rapport à un premier élément de transfert d'énergie lorsque les première et deuxième parties 32, 34 sont à l'état rapproché, les premier et deuxième éléments de transfert d'énergie électrique étant configurés pour assurer un transfert d'énergie électrique entre eux à l'état rapproché. Ainsi, dans cet état rapproché, les première et deuxième parties 32, 34 sont nécessairement positionnées de manière à assurer un transfert d'énergie électrique optimal grâce au logement 52 qui permet de centrer les premier et deuxième éléments de transfert d'énergie électrique l'un par rapport à l'autre.

## Revendications

1. Dispositif de transfert d'énergie électrique par induction magnétique comprenant une première partie (32) qui comporte une première face frontale (F32) et au moins un premier élément de transfert d'énergie électrique ainsi qu'une deuxième partie (34) qui comporte au moins un deuxième élément de transfert d'énergie électrique, les première et deuxième parties (32, 34) étant mobiles l'une par rapport à l'autre selon une direction de rapprochement entre un état écarté et un état rapproché, les premier et deuxième éléments de transfert d'énergie électrique étant configurés pour assurer un transfert d'énergie électrique entre eux à l'état rapproché ; la première partie (32) comprenant un premier logement (52) débouchant au niveau de la première face frontale (F32) de la première partie (32) et comportant au moins une première surface latérale (54), ledit premier logement (52) étant configuré pour loger au moins partiellement la deuxième partie (34), la deuxième partie (34) présentant une deuxième surface latérale (64) pour chaque première surface latérale (54) du premier logement (52) de la première partie (32), la deuxième partie (34) ayant une forme générale complémentaire de la forme du premier logement (52), chaque premier élément de transfert d'énergie électrique étant positionné au niveau de la première surface latérale (54) et chaque deuxième élément de transfert d'énergie électrique étant positionné au niveau de la deuxième surface latérale (64) et approximativement centré par rapport à un des premiers éléments de transfert d'énergie électrique lorsque les première et deuxième parties (32, 34) sont à l'état rapproché, la première partie (32) comprenant également au moins une couche d'éléments ferromagnétiques (46) entourant la première surface latérale (54), chaque premier élément de transfert d'énergie électrique étant positionné entre la couche d'éléments ferromagnétiques (46) et la première surface (54), **caractérisé en ce qu'**au moins une première surface latérale (54) présente des sections transversales qui diminuent en s'écartant de la première face frontale (F32), **en ce que** la couche d'éléments ferromagnétiques (46) présente une géométrie sensiblement identique à la première surface latérale (54) à une homothétie près, **en ce que** la première partie (32) comprend au moins un pion de centrage (62) dans le premier logement (52) et orienté parallèlement à la direction de rapprochement, **en ce que** la deuxième partie (34) comprend au moins un deuxième logement (70) configuré pour loger le au moins un pion de centrage (62), et **en ce que** la première partie (32) comprend un élément ferromagnétique (63) positionné dans le pion de centrage (62).

2. Dispositif de transfert d'énergie électrique selon la revendication précédente, **caractérisé en ce que** le dispositif comprend plusieurs premiers ou deuxièmes éléments de transferts d'énergie électrique décalés les uns par rapport aux autres selon la direction de rapprochement.

3. Dispositif de transfert d'énergie électrique selon l'une des revendications précédentes, **caractérisé en ce que** chaque première surface latérale (54) est une surface de révolution.

4. Dispositif de transfert d'énergie électrique selon l'une des revendications précédentes, **caractérisé en ce que** le premier logement (52) comprend deux premières surfaces latérales (54, 54'), dont une première surface latérale (54) distale écartée de la première face frontale (F32), présentant des sections transversales qui diminuent en s'écartant de la première face frontale (F32) ainsi qu'une première surface latérale (54') débouchante, adjacente à la première face frontale (F32), positionnée entre la première surface latérale (54) distale et la première face frontale (F32), présentant des sections transversales constantes.

5. Dispositif de transfert d'énergie électrique selon l'une des revendications précédentes, **caractérisé en ce qu'**au moins l'une des parties parmi les première et deuxième parties (32, 34) comprend un capteur de guidage (72) pour aider au positionnement des première et deuxième parties (32, 34) l'une par rapport à l'autre de manière centrée.

6. Dispositif de transfert d'énergie électrique selon l'une des revendications précédentes, **caractérisé en ce que** chaque premier élément de transfert d'énergie électrique est une première bobine (42) ou une spire (42.1, 42.2) d'une première bobine (42) et **en ce que** chaque deuxième élément de transfert d'énergie électrique est une deuxième bobine (48) ou une spire (44.1, 44.2) d'une deuxième bobine (42).

## Patentansprüche

1. Vorrichtung zur Übertragung elektrischer Energie durch magnetische Induktion, beinhaltend einen ersten Teil (32), der eine erste Stirnfläche (F32) und mindestens ein erstes Element zur Übertragung elektrischer Energie umfasst, sowie einen zweiten Teil (34), der mindestens ein zweites Element zur Übertragung elektrischer Energie umfasst, wobei der erste und der zweite Teil (32, 34) entlang einer Annäherungsrichtung zwischen einem beabstandeten Zustand und einem angenäherten Zustand relativ zueinander beweglich sind, wobei das erste und das zweite Element zur Übertragung elektrischer Energie dazu konfiguriert sind, im angenäherten Zustand eine Übertragung elektrischer Energie zwischen sich zu gewährleisten; wobei der erste Teil (32) eine erste Aufnahme (52) beinhaltet, die an der ersten Stirnfläche (F32) des ersten Teils (32) mündet und mindestens eine erste Seitenoberfläche (54) umfasst, wobei die erste Aufnahme (52) dazu konfiguriert ist, den zweiten Teil (34) mindestens teilweise aufzunehmen, wobei der zweite Teil (34) für jede erste Seitenoberfläche (54) der ersten Aufnahme (52) des ersten Teils (32) eine zweite Seitenoberfläche (64) aufweist, wobei der zweite Teil (34) eine zu der Form der ersten Aufnahme (52) komplementäre allgemeine Form aufweist, wobei jedes erste Element zur Übertragung elektrischer Energie an der ersten Seitenoberfläche (54) positioniert ist und jedes zweite Element zur Übertragung elektrischer Energie an der zweiten Seitenoberfläche (64) und relativ zu einem der ersten Elemente zur Übertragung elektrischer Energie ungefähr zentriert positioniert ist, wenn sich der erste und der zweite Teil (32, 34) im angenäherten Zustand befinden, wobei der erste Teil (32) ferner mindestens eine Schicht ferromagnetischer Elemente (46) beinhaltet, die die erste Seitenoberfläche (54) umgibt, wobei jedes erste Element zur Übertragung elektrischer Energie zwischen der Schicht ferromagnetischer Elemente (46) und der ersten Oberfläche (54) positioniert ist, **dadurch gekennzeichnet, dass** mindestens eine erste Seitenoberfläche (54) Querschnitte aufweist, die mit zunehmenden Abstand von der ersten Stirnfläche (F32) abnehmen, dass die Schicht ferromagnetischer Elemente (46) eine Geometrie aufweist, die zu der ersten Seitenoberfläche (54) bis auf eine Homothetie im Wesentlichen identisch ist, dass der erste Teil (32) mindestens einen Zentrierstift (62) in der ersten Aufnahme (52) beinhaltet, der zu der Annäherungsrichtung parallel ausgerichtet ist, dass der zweite Teil (34) mindestens eine zweite Aufnahme (70) beinhaltet, die dazu konfiguriert ist, den mindestens einen Zentrierstift (62) aufzunehmen, und dass der erste Teil (32) ein ferromagnetisches Element (63) beinhaltet, das in dem Zentrierstift (62) positioniert ist.

2. Vorrichtung zur Übertragung elektrischer Energie nach dem vorhergehenden Anspruch, **dadurch gekennzeichnet, dass** die Vorrichtung mehrere erste oder zweite Elemente zur Übertragung elektrischer Energie beinhaltet, die entlang der Annäherungsrichtung relativ zueinander versetzt sind.

3. Vorrichtung zur Übertragung elektrischer Energie nach einem der vorhergehenden Ansprüche, **dadurch gekennzeichnet, dass** jede erste Seitenoberfläche (54) eine rotationssymmetrische Oberfläche ist.

4. Vorrichtung zur Übertragung elektrischer Energie nach einem der vorhergehenden Ansprüche, **dadurch gekennzeichnet, dass** die erste Aufnahme (52) zwei erste Seitenoberflächen (54, 54') beinhaltet, darunter eine erste distale Seitenoberfläche (54), die von der ersten Stirnfläche (F32) beabstandet ist und Querschnitte aufweist, die mit zunehmendem Abstand von der ersten Stirnfläche (F32) abnehmen, sowie eine erste mündende Seitenoberfläche (54'), die an die erste Stirnfläche (F32) angrenzt, zwischen der ersten distalen Seitenoberfläche (54) und der ersten Stirnfläche (F32) positioniert ist und konstante Querschnitte aufweist.

5. Vorrichtung zur Übertragung elektrischer Energie nach einem der vorhergehenden Ansprüche, **dadurch gekennzeichnet, dass** mindestens einer der Teile von dem ersten und dem zweiten Teil (32, 34) einen Führungssensor (72) beinhaltet, um dabei zu helfen, den ersten und den zweiten Teil (32, 34) auf zentrierte Weise relativ zueinander zu positionieren.

6. Vorrichtung zur Übertragung elektrischer Energie nach einem der vorhergehenden Ansprüche, **dadurch gekennzeichnet, dass** jedes erste Element zur Übertragung elektrischer Energie eine erste Spule (42) oder eine Windung (42.1, 42.2) einer ersten Spule (42) ist und dass jedes zweite Element zur Übertragung elektrischer Energie eine zweite Spule (48) oder eine Windung (44.1, 44.2) einer zweiten Spule (42) ist.

## Claims

1. Electrical-energy transfer device achieving energy transfer through magnetic induction, comprising a first part (32) which comprises a first frontal face (F32) and at least one first electrical-energy transfer element, and a second part (34) which comprises at least one second electrical-energy transfer element, the first and second parts (32, 34) being able to move one relative to the other in a direction of closing between a distanced state and a close-up state, the first and second electrical-energy transfer elements being configured to perform a transfer of electrical energy between one another in the close-up state; the first part (32) comprising a first housing (52) opening onto the first frontal face (F32) of the first part (32) and comprising at least a first lateral surface (54), said first housing (52) being configured to at least partially house the second part (34), the second part (34) having a second lateral surface (64) for each first lateral surface (54) of the first housing (52) of the first part (32), the second part (34) having an overall shape that complements the shape of the first housing (52), each first electrical-energy transfer element being positioned at the first lateral surface (54) and each second electrical-energy transfer element being positioned at the second lateral surface (64) and approximately centred with respect to one of the first electrical-energy transfer elements when the first and second parts (32, 34) are in the close-up state, the first part (32) also comprising at least one layer of ferromagnetic elements (46) surrounding the first lateral surface (54), each first electrical-energy transfer element being positioned between the layer of ferromagnetic elements (46) and the first surface (54), **characterized in that** at least one first lateral surface (54) has cross sections which decrease with increasing distance away from the first frontal face (F32), **in that** the layer of ferromagnetic elements (46) has a substantially identical geometry to the first lateral surface (54), give or take any scaling, **in that** the first part (32) comprises at least one centring pin (62) for centring in the first housing (52), which pin is oriented parallel to the direction of closing, **in that** the second part (34) comprises at least one second housing (70) configured to house the at least one centring pin (62), and **in that** the first part (32) comprises a ferromagnetic element (63) positioned in the centring pin (62).

2. Electrical-energy transfer device according to the preceding claim, **characterized in that** the device comprises several first or second electrical-energy transfer elements offset from one another in the direction of closing.

3. Electrical-energy transfer device according to one of the preceding claims, **characterized in that** each first lateral surface (54) is a surface of revolution.

4. Electrical-energy transfer device according to one of the preceding claims, **characterized in that** the first housing (52) comprises two first lateral surfaces (54, 54'), these being a distal first lateral surface (54) distanced from the first frontal face (F32), having cross sections that decrease with increasing distance from the first front face (F32) and an open first lateral surface (54'), adjacent to the first frontal face (F32), positioned between the distal first lateral surface (54) and the first frontal face (F32) and having constant cross sections.

5. Electrical-energy transfer device according to one of the preceding claims, **characterized in that** of the first and second parts (32, 34) at least one comprises a guide sensor (72) to assist with the positioning of the first and second parts (32, 34) relative to one another in a centred manner.

6. Electrical-energy transfer device according to one of the preceding claims, **characterized in that** each first electrical-energy transfer element is a first coil (42) or a turn (42.1, 42.2) of a first coil (42) and **in that** each second electrical-energy transfer element is a second coil (48) or a turn (44.1, 44.2) of a second coil (42) .
